# EUROPEAN PATENT APPLICATION

(11) **EP 0 836 129 A1**
(43) Date of publication of application: **15.04.1998**
(21) Application number: 96402143.0
(22) Date of filing: 09.10.1996
(51) Int. Cl.: G05F 1/00, H02M 3/07

(54) **Voltage multiplier**

(71) Applicant: MOTOROLA SEMICONDUCTEURS S.A., F-31023 Toulouse Cédex (FR)
(72) Inventor: Givelin, Philippe, 31100 Toulouse (FR)
(74) Representative: Joly, Jean-Jacques

(57) **Abstract**

A voltage multiplier (2) for providing an output voltage signal (VOUT) at an output terminal (9) having a level which is greater than that of an input voltage signal (VCC) at an input terminal (8) comprises a first multiplying element (5) coupled to a second multiplying element (6) between the input terminal (8) and output terminal (9) and logic circuitry (28) coupled to the second multiplying element (6). The logic circuitry (28) being arranged to enable the second multiplying element when the level of the input voltage signal (VCC) is less than a predetermined level (Vref) and to disable the second multiplying element when the level of the input voltage (VCC) is greater than the predetermined level, wherein when the second multiplying element (6) is enabled the first (5) and second (6) multiplying elements multiply the input voltage signal (VCC) to provide the output voltage signal (VOUT) and when the second multiplying element is disabled the first multiplying element multiplies the input voltage signal (VCC) to provide the output voltage signal (VOUT).

## Description

### Field of the Invention

This invention relates to voltage multipliers.

### Background of the Invention

Voltage multipliers or charge pumps are used, for example, to drive the gate electrodes of power transistors arranged in a high-side configuration so that for each power transistor the voltage on the gate electrode is higher than the supply voltage on the drain electrode of the transistor by at least the threshold voltage of the transistor. Typically, a voltage drive signal of 10 Volts (V) above the supply voltage is desired to drive the gate electrode of a high-side power transistor.

Sometimes voltage multipliers are also required for low-side power transistors when the gate-source voltage is required to be at a certain level and the supply voltage is low.

In automotive applications, the supply voltage can vary significantly with time. For example, the supply voltage can vary between 5V and 30V. Thus, voltage multipliers for automotive applications are required to generate voltage drive signals of about 10V over the supply voltage for a wide supply range.

Conventional voltage multipliers comprise small value capacitors (e.g. those having a voltage handling capacity of 20-30V) which are coupled in parallel and which are successively charged and discharged. Since the capacitors can only handle a certain voltage level, the conventional voltage multipliers are not suitable for wide supply ranges as required for automotive applications. Typically, the conventional voltage triplers, having 30V capacitors and significant output current, can provide a 10V minimum overdrive signal for only a 8V to 16V range. Larger capacitors could be used to support the larger voltages but this increases the size of the circuit. Alternatively, a damp may be used on the last capacitor of the conventional multiplier. However, this latter solution has a power consumption problem since significant current must flow through the clamp.

A voltage multiplier that can operate in the supply range of 8V-40V using only small capacitors having a voltage handling capacity of 20V has been described in an article entitled "Driving and protection of high-side NMOS power switches" by W.C. Dunn in IEEE Transactions on Industry Applications, Vol. 28, No. 1, January/February 1992. This voltage multiplier comprises two voltage triplers which limits the voltage applied to the capacitors. However, the two voltage triplers are not capable of providing a 10V drive signal for supply voltage signals as low as 5V. A further problem with this voltage multiplier is that it requires twice as much capacitance as for the conventional voltage tripler and hence a larger silicon area. In addition, at any given time, the output of the voltage multiplier is connected to two series-connected capacitors. This increases the output resistance of the multiplier which limits the amount of output current available without too many voltage losses.

It is therefore an object of the present invention to provide an improved voltage multiplier that addresses the above problems.

### Summary of the Invention

In accordance with the present invention there is provided a voltage multiplier for providing an output voltage signal at an output terminal having a level which is greater than that of an input voltage signal at an input terminal, comprising:
a first multiplying element coupled to a second multiplying element between the input terminal and output terminal; and
logic circuitry coupled to the second multiplying element for enabling the second multiplying element when the level of the input voltage signal is less than a predetermined level and for disabling the second multiplying element when the level of the input voltage is greater than the predetermined level, wherein when the second multiplying element is enabled the first and second multiplying elements multiply the input voltage signal to provide the output voltage signal and when the second multiplying element is disabled the first multiplying element multiplies the input voltage signal to provide the output voltage signal.

### Brief Description of the Drawings

A voltage multiplier in accordance with the present invention will now be described, by way of example only, with reference to the accompanying drawings in which:
FIG. 1 is a block schematic diagram of a voltage multiplier in accordance with a preferred embodiment of the present invention; and
FIG. 2 shows representations of the variations of voltage signals over time at different nodes in the voltage multiplier of FIG. 1.

### Detailed Description

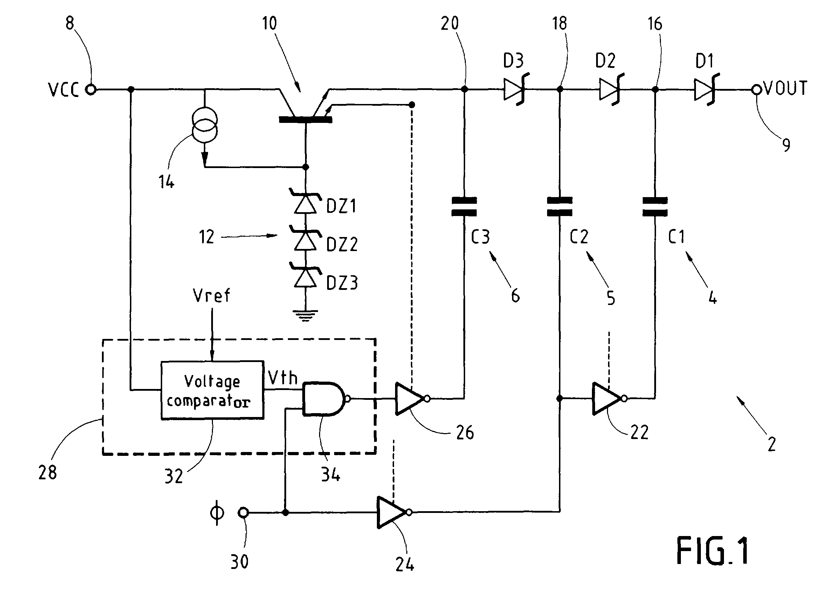

Referring firstly to FIG. 1, a voltage multiplier 2 in accordance with a preferred embodiment of the present invention provides an output voltage signal VOUT at an output terminal 9 having a level which is greater than the level of an input voltage signal supplied to an input terminal 8 of the voltage multiplier 2. The input voltage signal is preferably the supply voltage signal VCC, which in automotive applications is provided by the car battery and which can vary between 5V and 30V. The supply voltage signal VCC is coupled to three multiplying elements 4, 5 and 6 via a switch 10.

Switch 10 comprises a multi-emitter NPN bipolar transistor having a collector electrode coupled to input terminal 8, a base electrode coupled to a zener clamp 12, comprising a plurality of zener diodes DZ, and first and second emitters. A current source 14 is coupled between the collector and base electrodes of the switch transistor 10. The zener clamp 12 operates to clamp the supply voltage signal at the input terminal 8 to a certain level and also limits the level of the output signal VOUT.

A first one 4 of the multiplying elements comprises a capacitor C1 having a first terminal coupled to a node 16 and a second terminal coupled to an output of an inverter 22. Node 16 is coupled to the output terminal 9 via a diode D1.

A second one 5 of the multiplying elements comprises a capacitor C2 having a first terminal coupled to a node 18 and a second terminal coupled to an output of an inverter 24. The output of inverter 24 is also coupled to the input of inverter 22. Node 18 is coupled to node 16 via a diode D2.

A third one 6 of the multiplying elements comprises a capacitor C3 having a first terminal coupled to a node 20 and a second terminal coupled to an output of an inverter 26. Node 20 is coupled to node 18 via a diode D3.

The diodes D1-D3 act as one-way switches so as to isolate the capacitors C1-C3 from each other.

The first emitter of switch transistor 10 is coupled to node 20 and the second emitter of switch transistor 10 is coupled to the supply of the inverters 22, 24, 26 as shown in dotted lines in FIG. 1. A clock signal ø provided at a clock input 30 is coupled to an input of inverter 24. Inverters 22, 24, 26 function as voltage level shifters, such that when the signal on the input of the inverter is high a voltage of VCC - Vbe is applied to the second terminal of the respective capacitor and when the signal on the input of the inverter is low the second terminal of the capacitor is grounded.

The voltage multiplier 2 further comprises logic circuitry 28 for enabling the third multiplying element 6 when the level of the supply voltage signal VCC is less than a predetermined level. When the third multiplying element 6 is enabled, the voltage multiplier 2 acts as a voltage quadrupler. When the third multiplying element 6 is not enabled, the voltage multiplier acts as a voltage tripler. Thus, the voltage multiplier in accordance with a preferred embodiment of the present invention can function as a quadrupler or a tripler depending on whether the third multiplying element 6 is enabled or not, respectively.

Logic circuitry 28 comprises a voltage comparator 32 having a first input coupled to receive the supply voltage signal VCC and a second input coupled to receive a reference voltage Vref having the predetermined level. A signal Vth at an output of the comparator 32 represents the result of the comparison. When the level of the supply voltage signal VCC is less than the predetermined reference voltage level, the signal Vth is 'high', otherwise it is 'low'. The output of the comparator 32 is coupled to the third multiplying element 6 via a first input of a NAND gate 34. When the signal Vth is high or in a first state, the third multiplying element 6 is enabled and when the signal Vth is low in a second state, the third multiplying element 6 is disabled. A second input of the NAND gate 34 is coupled to receive the dock signal ø and the output of the NAND gate 34 is coupled to an input of the inverter 26.

The clock signal ø clocks the first 4, and second 5 multiplying elements and when enabled, the third multiplying element 6 so that each of the capacitors are successively charging and discharging. The logic is arranged so that when the third multiplying element 6 is enabled, capacitors C1 and C3 are charged and discharged in the same period.

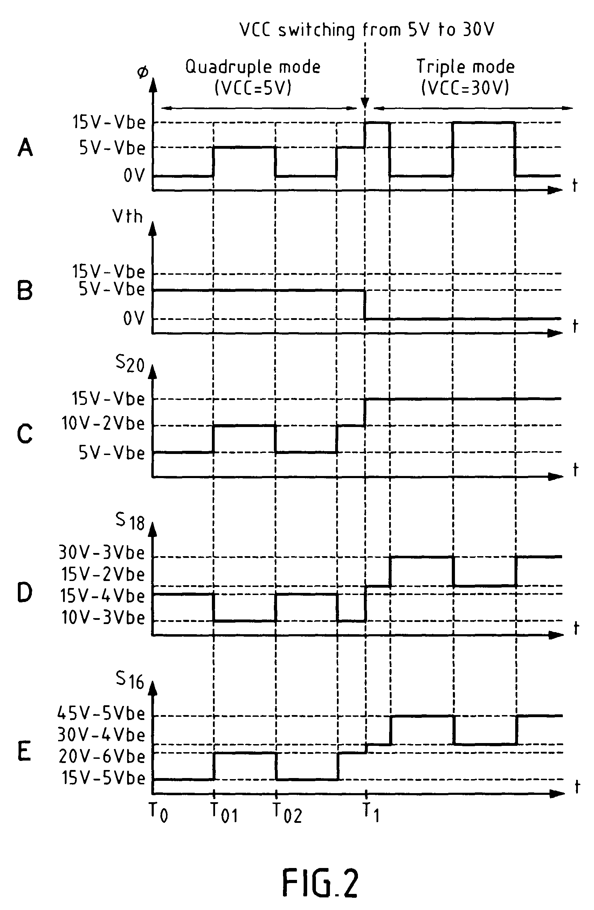

The operation of the voltage multiplier 2 in accordance with the preferred embodiment will now be described with reference to FIG. 1 and also to FIG. 2, which shows how the levels of the signals at different nodes of the voltage multiplier 2 vary with time and with different levels of the supply voltage signal VCC. It is assumed that the predetermined level of the reference voltage is set at 11V and that the zener clamp 12 clamps the voltage signal at the emitters of the switch transistor 10 to 15V.

In FIG. 2, graph A shows how the clock signal ø varies with time, graph B shows how the signal Vth at the output of the comparator 32 varies with time, graph C shows how a third signal S20 at node 20 varies with time, graph D shows how a second signal S18 at node 18 varies with time and graph E shows how a first signal S16 at node 16 varies with time. At time T1 the supply voltage signal level switches from 5V to 30V. Thus, between time T0 and T1, the supply voltage is at a level of 5V and after time T1 the supply voltage is at a level of 30V.

Between time T0 and T1, the level of the supply voltage signal VCC is less than that of the reference voltage Vref such that the signal Vth at the output of the comparator 32 is high, which in the preferred embodiment is VCC - Vbe, so that the third multiplying element 6 is enabled via NAND gate 34 and the voltage multiplier 2 operates as a quadrupler.

During period T0-T01 when the clock signal ø is low, the second terminal of capacitor C3 is grounded and the capacitor C3 is charged to VCC - Vbe, where Vbe is the diode drop across the switch transistor 10. During period T01-T02, the clock signal ø is high so that the second terminal of the capacitor C3 is coupled to a voltage VCC - Vbe due to the fact that the second emitter of the switch transistor 10 supplies the inverter 26. The third signal S20 at node 20 therefore becomes 2VCC - 2Vbe.

Capacitor C2 of the second multiplying element 5 is charged and discharged in the opposite phase to that of the capacitor C3. Thus, during period T0-T01 when the dock signal ø is low, the second terminal of capacitor C2 is coupled to a voltage VCC - Vbe due to the fact that the second emitter of the switch transistor 10 supplies the inverter 24. Since the node 18 is coupled to node 20 via diode D3, the second signal S18 at node 18 therefore becomes 3VCC - 4Vbe. During period T01-T02, the clock signal ø is high so that the second terminal of capacitor C2 is grounded and the capacitor C2 is charged to 2VCC - 3Vbe (voltage at node 20 minus Vbe).

Capacitor C1 of the first multiplying element 6 is charged and discharged during the same period as that of the capacitor C3. During period T0-T01 when the dock signal ø is low, the second terminal of capacitor C1 is grounded and the capacitor C1 is charged to 3VCC - 5Vbe (voltage at node 18 minus Vbe). During period T01-T02, the clock signal ø is high so that the second terminal of the capacitor C1 is coupled to a voltage VCC - Vbe due to the fact that the second emitter of the switch transistor 10 supplies the inverter 22. The first signal S16 at node 16 therefore becomes 4VCC - 6Vbe. The output signal VOUT at output terminal 9 is equal to S16 - Vbe or in other words, 4VCC - 7Vbe.

Thus, enabling the third multiplying element 6 ensures that voltage multiplier 2 functions as a quadrupler providing an output voltage signal VOUT having a minimum level of VCC + 10V over the range 5V to 11V.

After T1, the level of the supply voltage signal VCC is greater than that of the reference voltage Vref so that the signal Vth at the output of the comparator 32 goes low, wherein the third multiplying element 6 is disabled. When disabled, the second terminal of the capacitor C3 is grounded and the third signal S20 at node 20 remains at VCC-Vbe. The action of the zener clamp 12 ensures that the level of the third signal S20 is clamped to 15V-Vbe.

The second 5 and first 4 multiplying elements then act as a tripler in known manner to provide an output voltage signal whose value is 3VCC - 6Vbe.

Thus, switching the voltage multiplier 2 to function as a tripler by disabling the third multiplying element limits the voltage across the capacitor C1 of the first multiplying element 4 to 2VCC - 4Vbe. In this configuration, the limitation of the voltage level at the capacitor C1 is also partly achieved by clamping the supply voltage signal VCC at the node 20 of the voltage multiplier 2 to 15V - Vbe by way of the zener clamp 12. Even with the third multiplying element 6 disabled, the output voltage signal VOUT has a minimum level of VCC + 10V for VCC ranging from 11V to 30V.

In summary, the present invention provides a voltage multiplier that enables multiplying elements, so that for example the voltage niultiplier can act as a voltage quadrupler, tripler or doubler, only when they are needed. For example, the third multiplying element is enabled when the supply voltage signal is less than 11V. The present invention can therefore provide a voltage multiplier that can achieve a good drive signal, VCC + 10V, for a supply voltage signal that varies over a wide range such as 5V to 30V using only small capacitors e.g. 30V technology and without the need for additional damping elements or doubling of components as in the known multipliers described above. The present invention therefore avoids the problems of high power consumption and large silicon area of the known solutions described above.

Since the capacitors are only enabled when they are needed, this has an advantage in that the output resistance of the voltage multiplier, which depends on the capacitance coupled to the output at a given time, is always optimum. Moreover, since the 'turn-on' time of the voltage multiplier depends on the number of capacitors, the present invention has an optimum turn-on time.

Although the invention has been described with reference to a voltage multiplier including three multiplying elements, one of which is selectively enabled, it will be appreciated that the principle of enabling a multiplying element only when it is needed can be applied to voltage multipliers including two or more multiplying elements, one or more of which is capable of being selectively enabled. When a multiplying element is enabled depends on when the input voltage signal reaches a predetermined level associated with the multiplying element. For example, with reference to FIG. 1 for a voltage multiplier comprising two multiplying elements, the first multiplying element 4 is removed such that the voltage multiplier comprises a first multiplying element 5 and a second multiplying element 6.

## Claims

1. A voltage multiplier for providing an output voltage signal at an output terminal having a level which is greater than that of an input voltage signal at an input terminal, comprising:
a first multiplying element coupled to a second multiplying element between the input terminal and output terminal; and
logic circuitry coupled to the second multiplying element for enabling the second multiplying element when the level of the input voltage signal is less than a predetermined level and for disabling the second multiplying element when the level of the input voltage is greater than the predetermined level, wherein when the second multiplying element is enabled the first and second multiplying elements multiply the input voltage signal to provide the output voltage signal and when the second multiplying element is disabled the first multiplying element multiplies the input voltage signal to provide the output voltage signal.

2. A voltage multiplier according to claim 1, wherein the logic circuitry comprises a comparator having a first input for receiving the input voltage signal, a second input for receiving a reference voltage signal having the predetermined level and an output for providing a signal to the second multiplying element, the signal at the output of the comparator having a first state when the level of the input voltage signal is less than the predetermined level of the reference voltage signal or a second state when the level of the input voltage signal is greater than the predetermined level of the reference voltage signal, wherein the second multiplying element is enabled or disabled according to the state of the signal at the output of the comparator.

3. A voltage multiplier according to claim 1 or 2, wherein the first and second multiplying elements each comprise a capacitor and the voltage multiplier further comprises a clock input for receiving a clock signal, the clock signal being coupled to the first and second multiplying elements such that the capacitor of the first multiplying element is successively charged and discharged and when enabled the capacitor of the second multiplying element is successively charged and discharged but in opposite phase to that of the first multiplying element.

4. A voltage multiplier according to claim 3, wherein the logic circuitry further comprises a logic gate having a first input coupled to the output of the comparator, a second input coupled to receive the clock signal and an output coupled to the second multiplying element.

5. A voltage multiplier according to claim 4, wherein the first multiplying element comprises a first voltage level shifter having an input coupled to receive the clock signal, a supply input coupled to receive the input voltage signal and an output coupled to a terminal of the capacitor of the first multiplying element, and wherein the second multiplying element comprises a second voltage level shifter having an input coupled to the output of the logic gate, a supply input coupled to receive the input voltage signal and an output coupled to a terminal of the capacitor of the second multiplying element.

6. A voltage multiplier according to claim 3, 4 or 5, wherein the capacitor of the second multiplying element is coupled to the capacitor of the first multiplying element via an isolating diode.

7. A voltage multiplier according to any preceding claim, further comprising an input terminal for receiving the input voltage signal and a switch coupled between the input terminal and the first and second multiplying elements.

8. A voltage multiplier according to claim 7, wherein the switch comprises a switch transistor having a first current electrode coupled to the input terminal, a second current electrode for coupling to the first and second multiplying elements and a control electrode, and wherein the voltage multiplier further comprises a zener clamp coupled to the control electrode of the switch transistor.

9. A voltage multiplier according to claim 7, further comprising a current source coupled between the first current electrode and control electrode of the switch transistor.
